Europäisches Patentamt

European Patent Office

Office européen des brevets

(19)

(11) Publication number : **0 327 181 B1**

(12)   **EUROPEAN PATENT SPECIFICATION**

(45) Date of publication of patent specification :
16.12.92 Bulletin 92/51

(51) Int. Cl.⁵ : **A47J 31/06, A47J 31/057**

(21) Application number : **89200231.2**

(22) Date of filing : **02.02.89**

(54) **An adjustable coffee filter.**

(30) Priority : **03.02.88 NL 8800257**

(43) Date of publication of application :
**09.08.89 Bulletin 89/32**

(45) Publication of the grant of the patent :
**16.12.92 Bulletin 92/51**

(84) Designated Contracting States :
**DE FR GB NL SE**

(56) References cited :
**EP-A- 0 091 634**
**EP-A- 0 111 969**
**DE-U- 7 618 187**
**DE-U- 8 027 643**
**DE-U- 8 200 962**
**DE-U- 8 437 582**

(73) Proprietor : **Smitdesign B.V.**
**Utrechtsestraatweg 26**
**NL-3958 BP Amerongen (NL)**

(72) Inventor : **Smit, Gerard Clement**
**Utrechtsestraatweg 26**
**NL-3958 BP Amerongen (NL)**

(74) Representative : **Smulders, Theodorus A.H.J.,**
**Ir. et al**
**Vereenigde Octrooibureaux Nieuwe Parklaan**
**97**
**NL-2587 BN 's-Gravenhage (NL)**

## Description

This invention relates to a coffee filter for a coffee making apparatus, comprising a holder for receiving a suitable filter element, said holder having at least at the lower end a wall portion inclined relatively to the vertical axis and there being provided in the lower end of this inclined wall a coffee outflow opening, there being further provided at an interspace outside said inclined holder wall portion a substantially vertical wall, the outflow opening being closable by a valve attached to one end of a lever, a leaf spring biasing the valve into the closed position, which valve is controlled by a slide accessible from the outside, said slide carrying on the inside of the vertical wall a cam with a curved surface, the other end of the lever functioning as a cam follower in such a manner that the valve can be brought into different positions relative to the outflow opening.

Such a coffee filter is known from EP-A-0111969 (Figs. 5-8). In that filter, there are two mechanisms which influence the valve, namely, on the one hand, a mechanism for adjusting the opening of the valve and hence the outflow through the outflow opening, and on the other hand, a mechanism for closing the valve when a receptacle is taken away from under the coffee filter. The former mechanism comprises a slide with a cam with a curved surface, the slide being movable in circumferential direction and the curved surface also extending in circumferential direction behind the vertical wall at a distance from the inclining wall portion with the outflow opening. One end of a lever carries the valve. The other end thereof functions as a cam follower and is biased into contact with the curved surface by means of a coil spring which is mounted in a vertical telescopic holder assembly, which is to be pushed upwardly by the receptacle and the size of the outflow opening is dependent on the position of the cam follower on the curved surface. The latter mechanism comprises a leaf spring which becomes effective when the receptacle is removed and the telescopic holder assembly moves down as a result of which the cam follower disengages from the curved surface. The leaf spring, which is mounted in the inclined wall portion of the coffee filter, then pushes the valve into the closed position.

It is an object of the invention to provide a coffee filter that is of simple structure and comprises fewer components and therefore can be cleaned and assembled easily.

To that end a coffee filter of the type described in the opening paragraph hereof is characterized according to the invention in that the slide is mounted for axial adjustment in a slit in the vertical wall, said slide carrying directly against the inside of the vertical wall the cam with curved surface, the leaf spring extending across the space between the vertical outer wall and the inclined holder wall portion, the valve being disc-shaped, made from resilient material and being movable towards the inclined wall portion for closing off the outflow opening.

For adjusting the size of the outflow opening and for closing the outflow opening of the coffee filter according to the present invention, in principle only three elements are required, namely, a lever carrying a disc-shaped valve at one end thereof, a slide carrying a curved surface and a leaf spring. The slide directly carrying the cam ensures a stable cam displacement and the lever may be short, and hence stable, because the control cam is disposed at a short interspace directly opposite the outflow opening.

In a further elaboration of the present invention, the vertical wall portion opposite the outflow opening is connected to the inclined wall portion by two partitions on either side of the outflow opening, said partitions containing slits opening into their free lower edges for receiving the swivel shaft of the lever.

The lever is thereby stabilized laterally, while the assembly of the lever is restricted to the pushing of the swivel shaft of the lever into the slits.

By attaching according to the present invention the leaf spring to a bridge piece lockable in the open lower end of the slide-receiving slit, the entire valve and valve operating mechanism can be positioned by pushing the slide into the slit, placing the lever with its swivel shaft into the slits of the partitions and positioning the bridge piece. In addition to the valve operating function, the leaf spring then also has a retaining function for keeping the entire mechanism in place.

When furthermore, according to the present invention, the slit bottoms in the partitions, defining the pivot point of the lever, are spaced from the inclined holder wall portion containing the outflow opening and the lever has such a bend that in the closed position of the valve, the closing face of the valve disc lies flat on the inclined holder wall adjacent the outflow opening, the valve functions as a tilting poppet valve which, in the last stage of the closing range, performs a sliding movement across the outer surface of the inclined holder wall functioning as a valve seat. As a result, any contaminations on the seat surface or on the valve surface are scraped off, so that the valve is self-cleaning.

For the purpose of a perfect closure of the outflow opening, the valve disc may be provided with an annular projection surrounding the outflow opening in the closed position of the valve.

One embodiment of the coffee filter according to the present invention will now be described, by way of example, with reference to the accompanying drawings, in which:

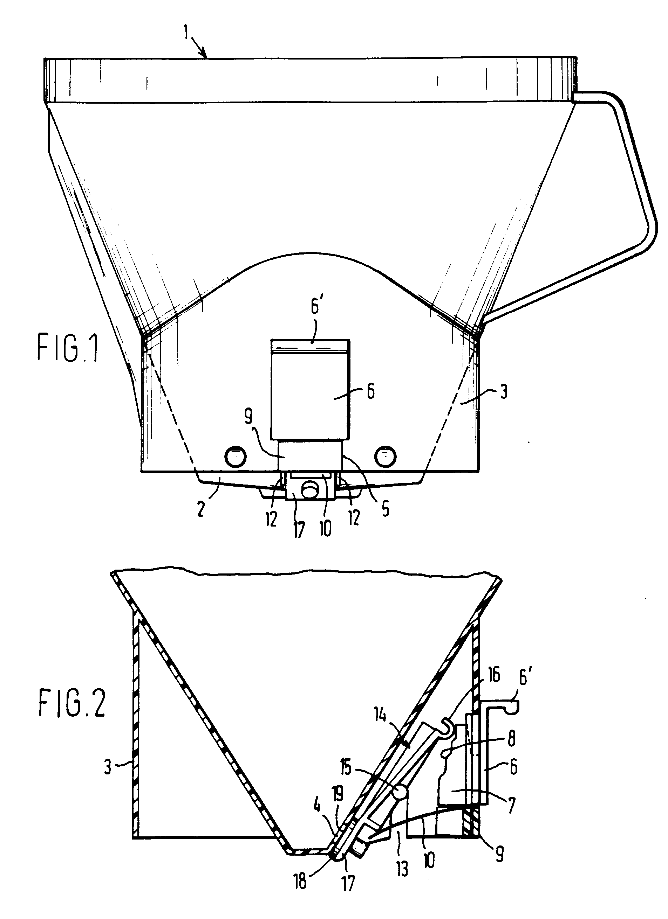

Fig. 1 is a lateral view of the coffee filter;

Figs. 2 and 3 are axial cross-sectional views of the valve and the valve operating mechanism in the closed, and in the entirely opened position, respectively; and

Fig. 4 is a perspective view of the valve disc.

As shown in the drawings, the coffee filter is provided with a substantially funnel-shaped holder 1 having a flattened lower end 2. A cylindrical sheath 3 extends downwardly about the lower end.

One of the inclined holder wall portions 2 contains a coffee outflow opening 4 near the lower end of the holder. In the cylinder wall of sheath 3 there is formed a slit 5 wherein a slide 6 is slidable. Slide 6, on the inside of sheath 3, carries a cam 7 having an undulated surface 8. Slit 5 is closable by a bridge piece 9 wherein a leaf spring 10 is fitted.

Sheath 3 and holder wall 2 are interconnected by two partitions 12 on either side of slit 5 and the outflow opening 4. Slits 13 are formed in partitions 12.

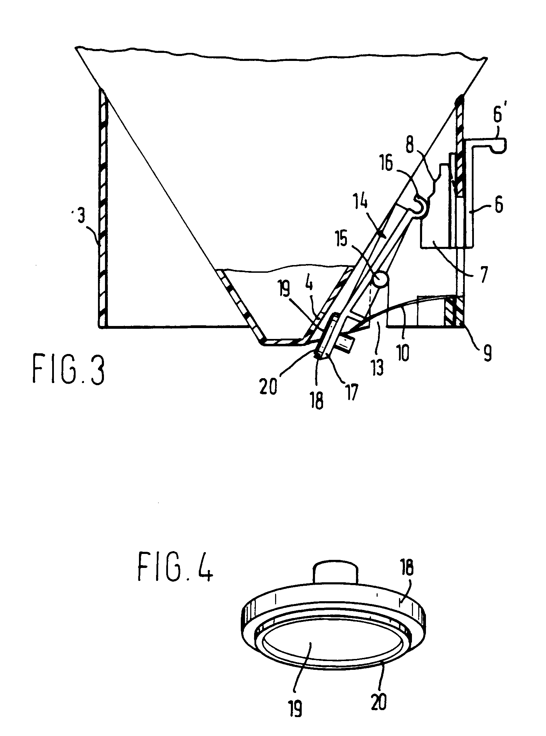

A lever 14 is introduced with its swivel shaft 15 into slits 13 and is retained in place by leaf spring 10. One end 16 of the lever functions as a cam follower and the other end 17 carries the valve member 18. The lever end 17 is bent in such a manner that in the closed position of valve 18, the closing face 19 thereof lies flat on the outer surface of the inclined holder wall 2. The closing face 19 of valve 18 is provided with an upright annular edge 20 (see Fig. 4), which surrounds the outflow opening 4 in the closed position of the valve.

By vertically sliding the slide 6 by means of grip 6′, which is accessible from the outside, the cam follower end 16 of lever 14 is displaced across the curved surface 8, thereby varying the inclination and hence the position 18 relatively to opening 4.

**Claims**

1. A coffee filter for a coffee making apparatus, comprising a holder (1) for receiving a suitable filter element, said holder (1) having at least at the lower end a wall portion (2) inclined relatively to the vertical axis and there being provided in the lower end of this inclined wall (2) a coffee outflow opening (4), there being further provided at an interspace outside said inclined holder wall portion (2) a substantially vertical wall (3), the outflow opening (4) being closable by a valve (18) attached to one end of a lever (14), a leaf spring (10) biasing the valve (18) into the closed position, which valve (18) is controlled by a slide (6) accessible from the outside, said slide (6) carrying on the inside of the vertical wall a cam (7) with a curved surface (8), the other end (16) of the lever (14) functioning as a cam follower in such a manner that the valve (18) can be brought into different positions relative to the outflow opening (4), characterized in that the slide (6) is mounted for axial adjustment in a slit (5) in the vertical wall (3), said slide (6) carrying directly against the inside of the vertical wall (3) the cam (7) with curved surface (8), the leaf spring (10) extending across the space between the vertical outer wall (3) and the inclined holder wall portion (2), the valve (18) being disc-shaped, made from resilient material and being movable towards the inclined wall portion (3) for closing off the outflow opening (4).

2. A coffee filter as claimed in claim 1, characterized in that the vertical wall portion (3) opposite the outflow opening (4) is connected to the inclined wall portion (2) by two partitions (12) on either side of the outflow opening (4), and that in said partitions (12) there are formed slits (13) opening into their free lower edges for receiving the swivel shaft (15) of the lever (14).

3. A coffee filter as claimed in claim 1 or 2, characterized in that the leaf spring (10) is attached to a bridge piece (9) lockable in the open lower end of the slide-receiving slit (5).

4. A coffee filter as claimed in any one of the preceding claims, characterized in that the slit bottoms (13) in the partitions defining the swivel point (15) of the lever (14) are spaced from the inclined holder wall portion (2) containing the outflow opening (4) and the lever (14) has such a bend that in the closed position of the valve (18), the closing face (19) of the valve disc (18) lies flat on the inclined holder wall (2) adjacent the outflow opening (4).

5. A coffee filter as claimed in any one of the preceding claims, characterized in that the valve disc (18) has an annular projection (20) on the closing face (19).

**Patentansprüche**

1. Kaffeefilter für eine Kaffeemaschine mit einem Halter (1) zum Aufnehmen eines geeigneten Filterelementes, wobei der Halter (1) wenigstens an dem unter Ende einen Wandbereich (2) hat, der relativ zur vertikalen Achse geneigt ist und dort in dem unteren Ende dieser geneigten Wand (2) eine Kaffeeausflußöffnung (4) vorgesehen ist, wobei dort weiterhin mit einem Zwischenraum außerhalb des geneigten Halterwandbereichs (2) eine im wesentlichen vertikale Wand (3) vorgesehen ist, die Ausflußöffnung (4) durch ein Ventil (18) verschließbar ist, welches an einem Ende eines Armes (14) befestigt ist, eine Blattfeder (10) das Ventil (18) in der geschlossenen Position unter Vorspannung hält, wobei das Ventil (18) durch einen von der Außenseite zugänglichen Schlitten (6) gesteuert ist, wobei der Schlitten (6) auf der Innenseite der vertikalen Wand eine Kurvenscheibe (7) mit einer kurvenförmigen Oberfläche (8) trägt, das andere Ende (16) des Armes (14) als Kurvenscheibenläufer in einer Weise funktioniert, daß das Ventil (18) in verschiedene Positionen relativ zur Ausflußöffnung (4) bringbar ist, dadurch gekennzeichnet, daß der Schlitten (6) zur axialen Justierung in einem Schlitz (5) in der vertikalen Wand (3) montiert ist, daß der Schlitten (6) direkt gegen die Innenseite der vertikalen Wand (3) die Kurvenscheibe (7) mit der kurvenförmigen Oberfläche (8) trägt, die Blattfeder (10) sich über den Zwischenraum zwischen der vertikalen äußeren Wand (3) und dem geneigten inneren Wandbereich (2) erstreckt, das Ventil (18) scheibenförmig ist, aus elastischen Material hergestellt ist und auf dem geneigten Wandbereich (3) zum Abschließen der Ausflußöffnung (4) bewegbar ist.

2. Kaffeefilter nach Anspruch 1, dadurch gekennzeichnet, daß der vertikale Wandbereich (3) gegenüber der Ausflußöffnung 14) mit dem geneigten Wandbereich (3) durch zwei Abschnitte (12) auf jeder Seite der Ausflußöffnung (4) verbunden ist und daß in den Abschnitten (12) Schlitze (13) ausgebildet sind, die sich in ihren freien unteren Enden zum Aufnehmen des Schwenkschaftes (15) des Armes (14) öffnen.

3. Kaffeefilter nach Anspruch 1 oder 2, dadurch gekennzeichnet, daß die Blattfeder (10) an einem Brückenstück (9) befestigt ist, das in dem offenen unteren Ende des den Schlitten aufnehmenden Schlitzes (5) arretierbar ist.

4. Kaffeefilter nach einem der vorstehenden Ansprüche, dadurch gekennzeichnet, daß die Schlitzböden (13) in den Abschnitten, die den Schwenkpunkt (15) des Armes (14) definieren, von dem geneigten Halterwandbereich (2) beabstandet sind, der die Ausflußöffnung (4) enthält und der Arm (14) einen solche Neigung hat, daß in der geschlossenen Position das Ventil (18) die Schließfläche (19) der Ventilscheibe (18) flach an der geneigten Halterwand (2) in der Nähe der Ausflußöffnung (4) liegt.

5. Kaffeefilter nach einem der vorstehenden Ansprüche, dadurch gekennzeichnet, daß die Ventilscheibe (18) einen ringförmigen Vorsprung (20) auf der Schließfläche (19) hat.

**Revendications**

1. Filtre à café pour une machine à café, comportant un support (1) pour recevoir un filtre adéquat, ledit support (1) ayant au moins à l'extrémité inférieure une partie de paroi (2) inclinée par rapport à l'axe vertical et étant prévue dans l'extrémité inférieure de cette paroi inclinée (2) une ouverture de sortie du café (4), étant également prévue au niveau d'un espacement extérieur à ladite partie de paroi inclinée du support (2) une paroi sensiblement verticale (3), l'ouverture de sortie (4) pouvant être fermée par un clapet (18) fixé à une extrémité d'un levier (14), un ressort à lame (10) faisant dévier le clapet (18) dans la position fermée, lequel clapet (18) est commandé par un curseur (6) accessible de l'extérieur, ledit curseur (6) portant sur l'intérieur de la paroi verticale une came (7) ayant une surface courbe (8), l'autre extrémité (16) du levier (14) fonctionnant comme une contre came de manière telle que le clapet (18) puisse être amené dans diverses positions par rapport à l'ouverture de sortie (4), caractérisé en ce que le curseur (6) est monté pour un ajustement axial dans une fente (5) de la paroi verticale (3), ledit curseur (6) portant directement contre l'intérieur de la paroi verticale (3) la came (7) ayant une surface courbe (8), le ressort à lame (10) s'étendant à travers l'espace entre la paroi verticale extérieure (3) et la partie de paroi inclinée du support (2), le clapet (18) étant en forme de disque, fait à partir d'un matériau élastique et étant déplaçable vers la partie de paroi inclinée (3) pour obturer l'ouverture de sortie (4).

2. Filtre à café selon la revendication 1, caractérisé en ce que la partie de paroi verticale (3) opposée à l'ouverture de sortie (4) est reliée à la partie de paroi inclinée (2) par deux cloisons (12) sur l'un et l'autre côté de l'ouverture de sortie (4), et en ce que dans lesdites cloisons (12) sont formées des fentes (13) s'ouvrant dans leurs bords inférieurs libres pour recevoir l'axe de pivot (15) du levier (14).

3. Filtre à café selon la revendication 1 ou 2, caractérisé en ce que le ressort à lame (10) est fixé une pièce en pont (9) qui peut se bloquer dans l'extrémité inférieure ouverte de la fente de réception du curseur (5).

4. Filtre à café selon l'une quelconque des revendications précédentes, caractérisé en ce que le fond des fentes (13) dans les cloisons définissant le point de pivot (15) du levier (14) sont espacés de la partie de paroi inclinée du support (2) contenant l'ouverture de sortie (4) et le levier (14) présente une courbure telle que dans la position fermée du clapet (18), la surface de fermeture (19) du disque du clapet (18) repose à plat sur la paroi inclinée du support (2) à côté de l'ouverture de sortie (4).

5. Filtre à café selon l'une quelconque des revendications précédentes, caractérisé en ce que le disque du clapet (18) comporte une saillie annulaire (20) sur la surface de fermeture (19).

EP 0 327 181 B1

FIG.1

1

6'

6

9

3

2

12

17

10

12

5

FIG.2

3

16

6'

14

8

15

6

4

19

7

18

17

13

10

9

6

FIG.3

FIG.4